# EUROPEAN PATENT APPLICATION

(11) **EP 2 120 064 A1**
(43) Date of publication of application: **18.11.2009**
(21) Application number: 08305146.6
(22) Date of filing: 02.05.2008
(51) Int. Cl.: G01S 15/89, G01S 7/52

(54) **A method for compensating a harmonic component of an emitted ultrasound wave**

(71) Applicant: INSERM (Institut National de la Santé et de la Recherche Médicale), 75654 Paris Cedex 13 (FR)
(72) Inventor: Bouakaz, Ayache, 37300 Joue les Tours (FR); Novell, Anthony, 37000 Tours (FR)
(74) Representative: Cabinet Plasseraud

(57) **Abstract**

Method for compensating an harmonic component (Hn) of an emitted ultrasound wave (es), comprising an ultrasound transducer (10). An excitation signal (e) is generated and comprises a first signal (e1) having a first harmonic component (H1) at a first fundamental frequency (f1) and being applied to the ultrasound transducer (10) for transmitting the emitted ultrasound wave (es). The emitted ultrasound wave (es) comprises the harmonic component (Hn) at a harmonic frequency higher and natural number multiple of the first fundamental frequency. The excitation signal (e) further comprises a second signal (e2) added to the first signal (e1), comprising parameters one of which is tuned so that the harmonic component has a minimal amplitude, the parameters being at least a predetermined frequency, a predetermined amplitude, a predetermined phase with respect to the first signal (e1), and a predetermined bandwidth. The predetermined frequency is different than the harmonic frequency.

## Description

The invention concerns a method for compensating a harmonic component of an emitted ultrasound wave from an electrostatic ultrasonic transducer.

The invention particularly concerns a method for compensating a harmonic component of an emitted ultrasound wave, comprising an excitation step wherein an excitation signal is generated, the excitation signal comprising at least a first signal having a first harmonic component at a first fundamental frequency and being applied to an ultrasound transducer for transmitting the emitted ultrasound wave in a volume towards a target object, and said emitted ultrasound wave comprises at least the harmonic component at a harmonic frequency higher than said first fundamental frequency and being a natural number multiple of said first fundamental frequency, said excitation signal further comprises a second signal added to said first signal, comprising parameters at least one of which is tuned so that the harmonic component at the harmonic frequency of the emitted ultrasound wave has a minimal amplitude, said parameters comprising at least a predetermined frequency, a predetermined amplitude, a predetermined phase with respect to said first signal, and a predetermined bandwidth.

The document US-6 461 299 discloses a method for imaging reflected ultrasound echo signals from a target object, wherein the predetermined frequency is equal to said harmonic frequency. Unfortunately, using this method, the amplitude of the first harmonic component of the first signal is modified.

The following invention tends to offer an alternative to the prior art method, without having the drawbacks of the prior method.

For this purpose, the method **is characterized in that** said predetermined frequency is different than said harmonic frequency.

Thanks to this predetermined frequency inside the second signal different than said harmonic frequency, the first harmonic component at the first fundamental frequency of the first signal is not influenced by said second signal.

In various embodiments of the method, one may further use one and / or other of the following dispositions:
- the predetermined frequency is higher than said harmonic frequency;
- the emitted ultrasound wave transmitted by the ultrasound transducer from the second signal comprises a low harmonic component at a frequency equal to said predetermined frequency minus said first fundamental frequency, this low harmonic component being produced by the non linearity of the ultrasound transducer, and
- said frequency being substantially equal to said harmonic frequency to minimise the amplitude of said harmonic component;
- the harmonic frequency is twice the first fundamental frequency;
- the ultrasound transducer which is used in the excitation step is a capacitive micromachined ultrasonic transducer;
- the predetermined amplitude minimising the amplitude of the harmonic component is searched into an interval of plus and minus 10 percent of the amplitude of the second signal producing a low harmonic component equal to the amplitude of the harmonic component to be minimised without the second signal;
- the predetermined phase minimising the amplitude of the harmonic component is searched into an interval of - 180 degrees to +180 degrees relative to said first signal;
- the predetermined amplitude and the predetermined phase are determined by using a frequency response function of the ultrasound transducer.

Another object of the invention is a device comprising an ultrasound transducer for transmitting an emitted ultrasound wave in a volume towards a target object and for receiving a received ultrasound wave reflected by the target object from said emitted ultrasound wave. The device is designed for implementing a method as defined above and is either producing images of the volume or transmitting the emitted ultrasound wave to modify the target object.

Other features and advantages of the invention will be apparent from the following detailed description of an embodiment thereof, given by way of non-limitating example, with reference to the accompanying drawings. In the drawings:
- Figure 1 is a block diagram illustrating the method according to the invention,
- Figure 2 is a frequency spectrum of the first signal,
- Figure 3 is a frequency spectrum of the emitted ultrasound wave of the first signal, the spectrum of which is represented on figure 2, and the emitted ultrasound wave being emitted by the ultrasound transducer of figure 1,
- Figure 4 is a frequency spectrum of the second signal,
- Figure 5 is a frequency spectrum of the emitted ultrasound wave of the second signal, the spectrum of which is represented on figure 4,
- Figure 6 is a frequency spectrum of the excitation signal,
- Figure 7 is a frequency spectrum of the emitted ultrasound wave of the excitation signal, the spectrum of which is represented on figure 6,
- Figure 8 is a frequency spectrum of the emitted ultrasound wave of the excitation signal for compensating the second harmonic of the spectrum of figure 3,
- Figure 9 is a frequency spectrum of the excitation signal according to prior art method of compensation,
- Figure 10 is a frequency spectrum of the emitted ultrasound wave of the excitation signal according to prior art method of compensation, the spectrum of which is represented on figure 8,
- Figure 11 is an example an excitation signal in time domain.

In the different figures, the same references denote identical or similar elements.

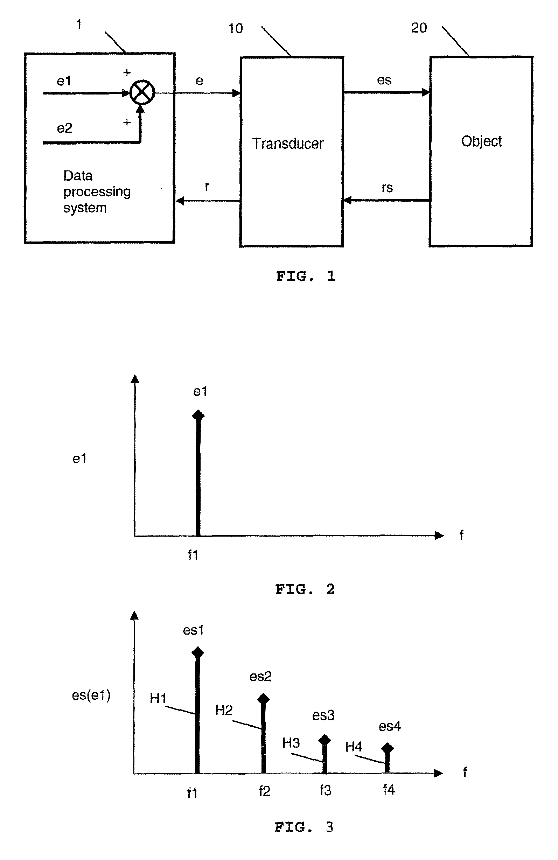

In figure 1, an ultrasound transducer 10 firstly transforms an excitation signal e into an emitted ultrasound wave es transmitted in a volume medium to a target object 20. The ultrasound transducer 10 is usually an electrostatic ultrasound transducer, and for example a capacitive micromachined ultrasonic transducer.

The target object 20 reflects the emitted ultrasound wave es into a received ultrasound wave rs, back to the ultrasound transducer 10.

The ultrasound transducer 10 secondly transforms the received ultrasound wave rs into a received signal r.

The excitation signal e is a sum of a first signal e1 and at least a second signal e2.

The first signal e1 is the main signal intended to produce via the ultrasonic transducer 10 an ultrasonic wave to be transmitted in the volume medium.

The second signal e2 is a correction signal to compensate and reduce the non linearity of the ultrasonic transducer 10.

Figure 2 shows a frequency spectrum of the first signal e1. The frequency spectrum abscissa represents the frequencies. The frequency spectrum ordinate represents the amplitude of the signal spectrum for each frequency.

The first signal e1 is a substantially a pure sine signal at a first fundamental frequency f1.

Figure 3 shows the emitted ultrasound wave es frequency spectrum of the first signal e1, the spectrum of which is represented on the figure 2.

The ultrasound transducer 10 is non linear. Consequently, the pure sine first signal e1 is transformed as a first distorted emitted ultrasound wave es(e1) having a first set of harmonic components, a first harmonic component H1 at a first fundamental frequency f1 and having an amplitude es1, a second harmonic component H2 at a second frequency f2 and having an amplitude es2, a third harmonic component H3 at a third frequency f3 and having an amplitude es3, a fourth harmonic component H4 at a fourth frequency f4 and having an amplitude es4, and others harmonic components at least at higher frequencies.

Each harmonic component Hi is at a harmonic frequency fi, has an amplitude esi, and has a phase pesi (not shown) relative to the first signal e1.

The amplitudes esi of each harmonic component Hi in the emitted ultrasound wave es depend mainly on the non-linearity of the ultrasound transducer 10. They can be all different from each other.

The phases pesi of each harmonic component Hi in the emitted ultrasound wave es also depend mainly on the non-linearity of the ultrasound transducer 10. They can be all different from each other.

The harmonic component at the second frequency f2 and at higher frequencies in the first distorted emitted ultrasound wave es(e1) are unwanted perturbations in the emitted wave.

The received ultrasound wave rs, back to the ultrasound transducer 10, includes also a received set of harmonic components, that enables the detection of the target object 20 and enables a data processing system 1 to provide an image of a volume in front of the ultrasound transducer 10. Such imaging system is called an harmonic imaging system.

Usually the harmonic imaging system uses only one harmonic component in this received set of harmonic components. More often the harmonic imaging system uses the harmonic component at the second frequency f2 in this received set of harmonic components to provide the image.

Consequently, the first set of harmonic components in the emitted ultrasound wave es is undesirable in the imaging system.

Then, at least one specific harmonic component of the first set of harmonic components is chosen to be cancelled, for example a harmonic component Hn at a harmonic frequency fn, and for example the second harmonic component H2 at the second frequency f2.

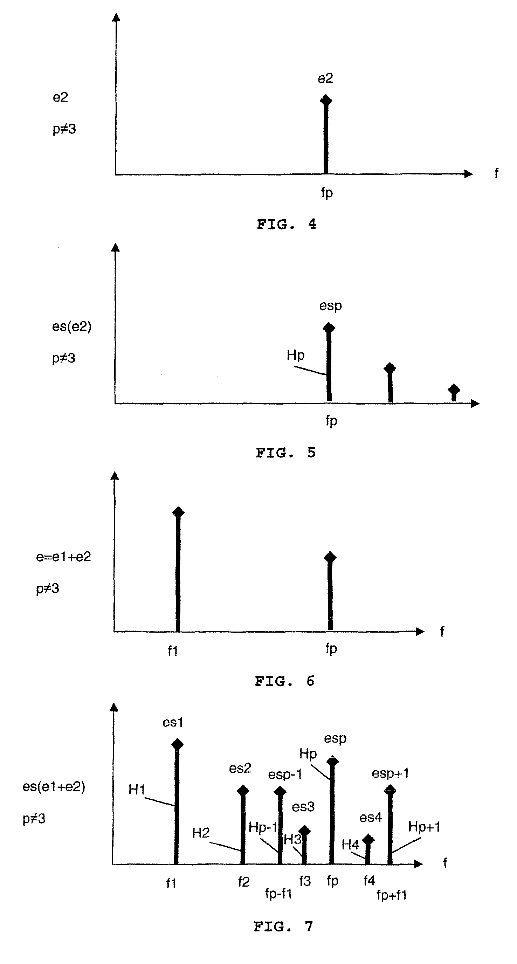

Figure 4 shows a frequency spectrum of the second signal e2, wherein this second signal e2 is a substantially pure sine signal at a predetermined frequency fp.

This predetermined frequency fp is chosen higher than the first fundamental frequency f1, and higher than the harmonic frequency fn to be cancelled.

Figure 5 shows the emitted ultrasound wave es frequency spectrum of the second signal e2 of the figure 4.

The pure sine second signal e2 is transformed by the non-linear transducer 10 into a second distorted emitted ultrasound wave es(e2) having a second set of harmonic components, a first harmonic component Hp at the predetermined frequency fp and having an amplitude esp, other harmonic components at higher frequencies than the predetermined frequency fp. Figure 6 shows a frequency spectrum of the excitation signal e. In this case, the excitation signal e is a sum of two sine signals: the first signal e1 at the first frequency f1, and the second signal e2 at the predetermined frequency fp, with a predetermined phase pesp with respect to the first signal e1.

Figure 7 shows the emitted ultrasound wave es frequency spectrum of the excitation signal e the spectrum of which is represented on the figure 6.

In that case of an excitation signal e having a first signal e1 at the frequency f1, and a second signal e2 at the predetermined frequency fp, the emitted ultrasound wave es(e) frequency spectrum has a third set of harmonic components, comprising the first set of harmonic components of the first signal e1, that is to say H1, H2, H3, H4, etc, and comprising the second set of harmonic components of the second signal e2, that is to say Hp, etc, and at least two additional harmonic components :
- a low harmonic component Hp-1 at a frequency fp-1 equal to the predetermined frequency fp minus the first fundamental frequency f1, and
- a high harmonic component Hp+1 at a frequency fp+1 equal to the predetermined frequency fp plus the first fundamental frequency f1.

The low harmonic component Hp-1 has an amplitude esp-1 and a phase pesp-1 with respect to the first signal e1. Similarly, the high harmonic component Hp+1 has an amplitude esp+1 and a phase pesp+1 with respect to the first signal e1.

The low harmonic component Hp-1 and the high harmonic component Hp+1 are each linked to the first harmonic component Hp of the second signal e2.

The phase difference pesp-1 minus pesp is a characteristic of the ultrasonic transducer 10, and can be predetermined for example by a measurement.

The tuning of the frequency, the amplitude and the phase of the first harmonic component Hp is tuning the frequency, the amplitude and the phase of the low harmonic component Hp-1.

Figures 4 to 7 represent frequency spectra with a predetermined frequency fp different and higher than the third frequency f3.

In the light of figure 7, it should be understand that if the predetermined frequency fp is swept down to the third frequency f3, then:
- the first harmonic component Hp of the second signal e2 is combined with the third harmonic component H3 of the first signal e1,
- the low harmonic component Hp-1 of the second signal e2 is combined with the second harmonic component H2 of the first signal e1, and
- the high harmonic component Hp+1 of the second signal e2 is combined with the fourth harmonic component H4 of the first signal e1.

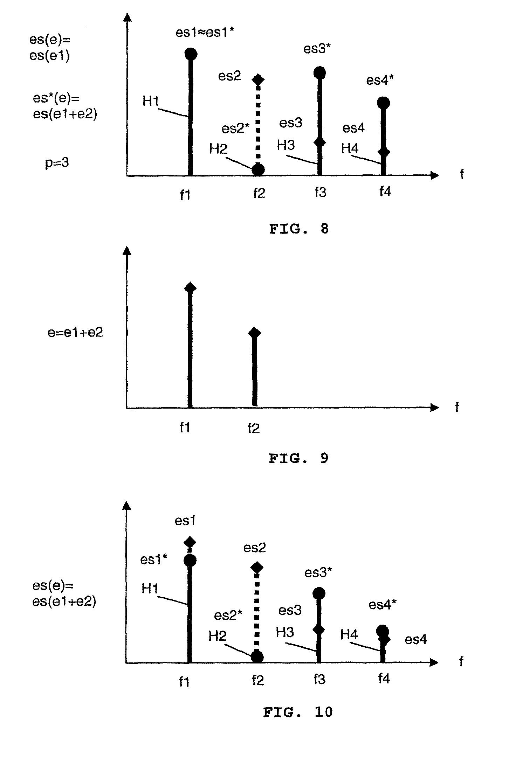

In this example, our interest is in the combination of the low harmonic component Hp-1 of the second signal e2 with the second harmonic component H2 of the first signal e1, that is illustrated in the next figure 8.

Figure 8 shows with dashed lines and rhomb ends, the emitted ultrasound wave es frequency spectrum of the first signal e1 without compensation (same as figure 3), and shows with continuous lines and circle ends, the emitted ultrasound wave es* frequency spectrum of the excitation signal e, that is to say with compensation or cancellation of the second harmonic component H2 at the second frequency f2.

The predetermined frequency fp of the second signal e2 is equal to the third frequency f3, so that the frequency fp-1 is equal to the second frequency f2.

The excitation signal e is transformed as a distorted emitted ultrasound wave es*(e) having a set of harmonic components, a first harmonic component H1 at a first fundamental frequency f1 and having an amplitude es1*, a second harmonic component H2 at a second frequency f2 and having an amplitude es2*, a third harmonic component H3 at a third frequency f3 and having an amplitude es3*, a fourth harmonic component H4 at a fourth frequency f4 and having an amplitude es4*, and others harmonic components at least at higher frequencies.

The first amplitude es1* with compensation, of the distorted emitted ultrasound wave es*(e), is similar to the first amplitude es1 of the first distorted emitted ultrasound wave es(e1). Consequently, the compensation has low or no influence on the first harmonic component H1.

The second amplitude es2* with compensation, of the distorted emitted ultrasound wave es*(e), is very small, and almost null, that is to say much smaller that the second amplitude es2 of the first distorted emitted ultrasound wave es(e1). Consequently, the second signal e2 is cancelling the second harmonic component H2 of the first distorted emitted ultrasound wave es(e1), compensating the non linearity of the ultrasonic transducer 10 for this second frequency f2.

The amplitude es3* with compensation is different from the amplitude es3 without compensation. The amplitude es4* with compensation is different from the amplitude es4 without compensation.

Consequently, the compensation of the second harmonic component H2 does not influences the first harmonic component H1 of the distorted emitted ultrasound wave es*(e).

To cancel the second harmonic component H2, the predetermined amplitude esp and the predetermined phase pesp should be accurately predetermined before the use of the ultrasonic transducer 10. For example, this predetermination can be done with the measurements of the emitted ultrasound wave es in a calibration test bench of the ultrasonic transducer.

According to a first embodiment, the predetermined amplitude esp should be near the amplitude producing a low harmonic component Hp-1 having an amplitude equal to the amplitude es2 of the harmonic component H2 to be minimised. The predetermined amplitude esp is then searched into an amplitude interval of plus 10 percent to minus 10 percent of the amplitude producing a low harmonic component Hp-1 having an amplitude equal to the amplitude es2 of the harmonic component H2.

The predetermined phase pesp is also searched into a phase interval of -180 degrees to +180 degrees relative to the first signal e1.

The harmonic component H2 has a phase pes2. The low harmonic component Hp-1 has a phase pesp-1.

The predetermined phase pesp can be searched into a phase interval of -10 degrees to +10 degrees of the phase producing a low harmonic component Hp-1 having a phase equal to 180 degree plus the phase pes2 of the harmonic component H2.

The search of the optimal parameters leading to the minimum amplitude of the second harmonic component H2 could be realised by a succession of tries in the amplitude and phase intervals.

According to a second embodiment, the optimal parameters leading to the minimum amplitude of the second harmonic component H2 could be estimated with a calculus using a frequency response function of the ultrasound transducer 10. This method of search, described in the prior art document US-6 461 299, can be applied to the present invention. Figures 9 and 10 are illustrating the prior art method for compensating the second harmonic component H2 at the second frequency f2 of an emitted ultrasound wave. As shown in figure 9, the second signal e2 is substantially a pure sine wave at the second frequency f2. As shown in figure 9, similar to the figure 7 and showing the distorted emitted ultrasound wave with and without compensation, es*(e) and es(e1), the second harmonic component H2 is cancelled, but the first harmonic component H1 is affected by the compensation.

The present method does not affect the first harmonic component H1, and improves the compensation technique of the non linearities of the ultrasound transducer 10 for a harmonic imaging system.

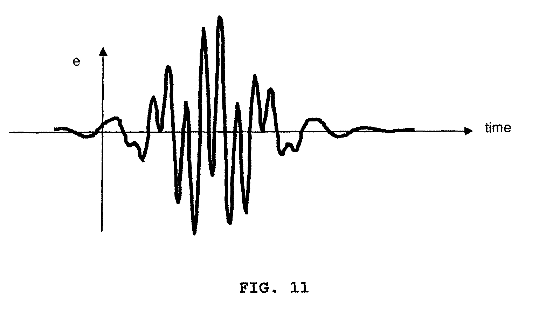

The previous method is applied to burst excitation signals, time limited with a time window as it is well-known. Figure 11 shows an example of such excitation signal in the temporal domain.

This excitation signal is not an infinite sine signal. Consequently, the frequency spectrum of this signal is spread into frequencies around the sinus frequency with a frequency bandwidth. The tuning of the time window and the signal time length tunes the frequency bandwidth of the emitted wave.

The predetermined bandwidth of the second signal e2can therefore be determined and optimised to minimise the amplitude of the harmonic component H2.

The previous method is detailed for the cancellation of the second harmonic component H2. But, it could be used for the cancellation of any harmonic component Hi of the distorted emitted ultrasound wave es.

Moreover, the previous method could be used for the cancellation of a plurality of harmonic components of the distorted emitted ultrasound wave es.

## Claims

1. Method for compensating a harmonic component (Hn) of an emitted ultrasound wave (es), comprising excitation step wherein an excitation signal (e) is generated, the excitation signal comprising at least a first signal (e1) having a first harmonic component (H1) at a first fundamental frequency (f1) and being applied to an ultrasound transducer (10) for transmitting the emitted ultrasound wave (es) in a volume toward a target object (20), and said emitted ultrasound wave (es) comprises at least the harmonic component (Hn) at an harmonic frequency (fn) higher than said first fundamental frequency (f1) and being a natural number multiple of said first fundamental frequency (f1), said excitation signal (e) further comprises at least a second signal (e2) added to said first signal (e1), comprising parameters at least one of which is tuned so that the harmonic component (Hn) at the harmonic frequency (fn) of the emitted ultrasound wave (es) has a minimal amplitude, said parameters comprising at least a predetermined frequency (fp), a predetermined amplitude (esp), a predetermined phase (pesp) with respect to said first signal (e1), and a predetermined bandwidth, said method **being characterized in that** said predetermined frequency (fp) is different than said harmonic frequency (fn).

2. The method of claim 1, wherein said predetermined frequency (fp) is higher than said harmonic frequency (fn).

3. The method of claim 1, wherein:
- the emitted ultrasound wave (es) transmitted by the ultrasound transducer (10) from the second signal (e2) comprises a low harmonic component (Hp-1) at a frequency (fp-1) equal to said predetermined frequency (fp) minus said first fundamental frequency (f1), this low harmonic component (Hp-1) being produced by the non linearity of the ultrasound transducer (10), and
- said frequency (fp-1) being substantially equal to said harmonic frequency (fn) to minimise the amplitude of said harmonic component (Hn).

4. The method of any preceding claims, wherein the harmonic frequency (fn) is twice the first fundamental frequency (f1).

5. The method of any preceding claims, wherein the ultrasound transducer (10) which is used in the excitation step is a capacitive micromachined ultrasonic transducer (cMUT).

6. The method of any preceding claims, wherein the predetermined amplitude (esp) minimising the amplitude of the harmonic component (Hn) is searched into an interval of plus and minus 10 percent of the amplitude of the second signal (e2) producing a low harmonic component (Hp-1) equal to the amplitude of the harmonic component (Hn) to be minimised without the second signal (e2).

7. The method of any preceding claims, wherein the predetermined phase (pesp) minimising the amplitude of the harmonic component (Hn) is searched into an interval of-180 degrees to +180 degrees relative to said first signal (e1).

8. The method of any claims 1-5, wherein the predetermined amplitude (esp) and the predetermined phase (pesp) are determined by using a frequency response function of the ultrasound transducer (10).

9. A device, comprising:
- an ultrasound transducer (10) for transmitting an emitted ultrasound wave (es) in a volume towards a target object (20) and for receiving a received ultrasound wave (rs) reflected by said target object (20) from said emitted ultrasound wave (es) , and
- a data processing system (1) for generating an excitation signal (e) applied to the ultrasound transducer (10) and for receiving a received signal (r) from said ultrasound transducer (10), the device **being characterized in that** the device is adapted to implement the method of any preceding claims, and is either producing images of the volume or transmitting the emitted ultrasound wave (es) to modify the target object (20).
